# EUROPEAN PATENT APPLICATION

(11) **EP 2 515 303 A1**
(43) Date of publication of application: **24.10.2012**
(21) Application number: 11163041.4
(22) Date of filing: 19.04.2011
(51) Int. Cl.: G11B 20/10, G11B 27/034, G11B 27/10, G11B 27/32, G11B 27/34, H04N 5/76

(54) **A method for managing storage space in a media device**

(71) Applicant: Nagravision S.A., 1033 Cheseaux-sur-Lausanne (CH)
(72) Inventor: Wenger, Joel, 1163, Etoy (CH)
(74) Representative: Leman Consulting S.A.

(57) **Abstract**

An embodiment of the present invention may be deployed in a personal video player/recorder to manage the storage of events. The invention allows for a user to decide on the importance of a particular event at the time it is stored or subsequently to its storage in such a way that he maintains control over which events may be automatically erased by the video player/recorder's operating system whenever it is deemed that space has to be made on the storage medium to allow for a new event or events to be stored.

## Description

### TECHNICAL DOMAIN

The present invention relates to the domain of storage of digital media files in portable media devices such as personal video recorders and the like.

### STATE OF THE ART

Audio/video events, generally in the form of digital media files, may be stored in an event memory for subsequent playback on an audio/video event player. Included in the term audio/video is any file comprising data whose playback allows a user to hear, see or hear and see an event. By event are included an audio experience such as an audio book, radio programme or musical piece for example, a video experience such as a film or sitcom for example or a gaming experience such as a computer application or game for example. Typically the event memory will be a storage area which is built into an apparatus for recording/playing back an event, such as a personal video recorder (PVR) or other audio/video recorder for example. Events may be pre-stored or pushed onto the media recorder or recorded by the user into available space in the event memory for subsequent playback.

The present invention is more specifically destined for portable audio/video recorders such as PVRs however, since by the nature of their portability, the storage area and therefore the available storage space for events is somewhat limited. At some point during the use of such an audio/video recorder the event storage area, or memory, will become full. At this time it will no longer be possible to record any further events as there will not be enough storage space left.

This problem is typically solved in the state of the art by a management system within the apparatus whose job it is to make storage space available in the memory by deleting a certain amount of already recorded events. The management system is typically designed to be able to achieve this job on an automatic basis in that it is the management system which decides which events are to be deleted to make room for the new event or events to be recorded. The choice may be made based on the size of the new event or events compared with the size of already stored events, the age of the already stored events, for example with oldest events being deleted first, or the least recently played events being deleted first or based on the frequency of use of already stored events, with least used events being deleted first for example.

United States Patent Application Publication number US 2009/0132453 A1 is close prior art in respect to the present invention and describes a portable media recorder/player which features an automatic, controlled deletion of stored events, the control being based on the age of the stored events or based on the access history associated with the stored events. To do this, an automatic ranking system is built, based on automatically deduced or inferred interest levels. When the available space within the storage area reaches a predefined percentage of the total available storage area (i.e. a predefined threshold of total available capacity), the system can then begin deleting events based on their ranking.

Other prior art includes content managers such as the one described in United States Patent Application Publication number US 2011/0004600 A1. This document focuses on automatically populating storage area of a portable device with content and therefore also covers the automatic deletion of stored content to make space for new content. Other prior art includes systems which automatically learn user interest, allowing them to automatically delete events which it deems are of least interest to the user. Such systems are widely used in MP3 players for example and are aimed at automatically keeping a user's media player populated while ensuring that the user's interest in the material selected to populate the device will remain high. The aim is to keep the player full with hopefully interesting material without the user having to preoccupy himself with what gets added and what gets removed. Such systems are described in United States Patent Application Publication number US 2006/0163358 A1 for example.

### BRIEF SUMMARY OF THE INVENTION

The prior art systems described above are all designed with the specific aim of automatically detecting what to delete whenever new material or events are to be loaded into a media device's memory. Indeed there is a general tendency to automate such processes to such an extent that no user intervention is required other than configuring preferences at the outset, such as threshold of memory capacity at which the automatic deletion will take place, threshold of age of stored elements deemed to be old enough to signify least importance, threshold of number of accesses to events deemed to be low enough to signify least importance etc. In some cases even this amount of configuration is unnecessary as the system can progressively configure itself based on observations of the user's habits.

However there is a need for certain users to maintain control over what gets deleted and what does not get deleted. There may be reasons whereby a never-accessed event could be of importance to a certain user or a particularly old event may be of interest to another user. In this respect there is a need to have a system which can make space for new events on an automatic basis but wherein the user maintains control of the designation of what is important.

In view of the prior art, it is an aim of the present invention to provide such a system whereby the user can maintain control over what may eventually get deleted when the system deems that space is to be made for new events.

It is a further aim of the present invention to provide different ways of making space available for new events, which do not necessarily lead to the simple deletion of an event when it is deemed that space needs to be made available for new events.

The aims of the present invention are therefore achieved using a method for managing storage space in a media device, said storage space being in a storage area for events, said events being digital media files, said storage area having a storage capacity, said management comprising storage of events in the storage space and/or removal of events stored in the storage area, said method characterised in that it allows for a user of said media device to have control over which events may be removed, said method comprising a storage phase and a clean-up phase, said storage phase comprising:
attributing a persistence level to an event, said attribution made by the user;
   and
storing the event and its attributed persistence level in the storage area; and said clean-up phase comprising:
   freeing up at least part of the storage area in an automated manner based on a comparison of a stored event's attributed persistence level with a predetermined persistence level threshold.

### BRIEF DESCRIPTION OF THE DRAWINGS

The present invention will be better understood thanks to the detailed description which follows and the accompanying drawings, which are given as non-limiting examples of embodiments of the invention, wherein:

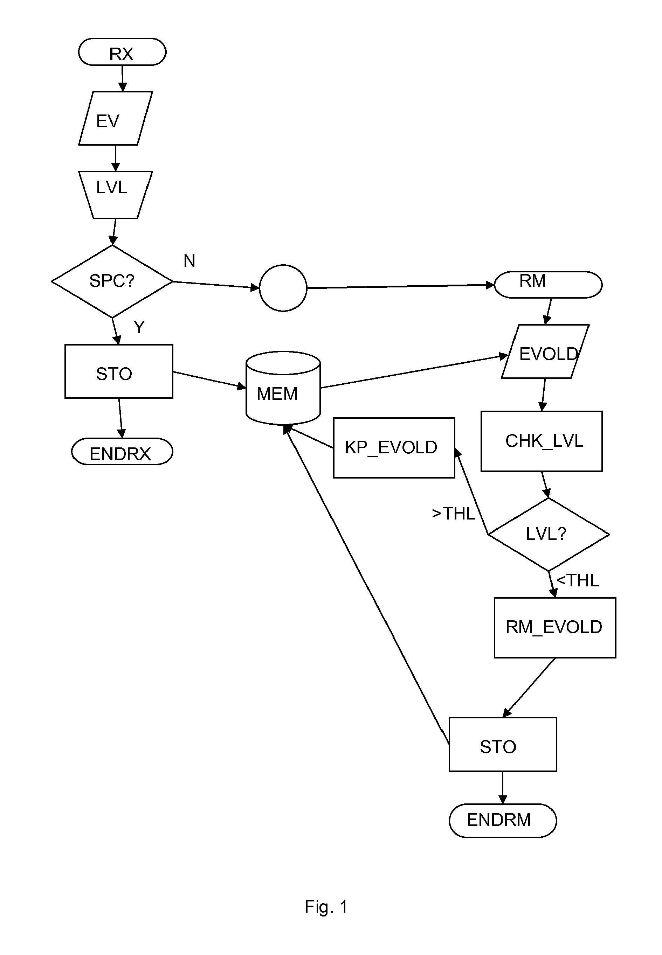

Fig. 1 shows a flowchart depicting a process according to an embodiment of the present invention;

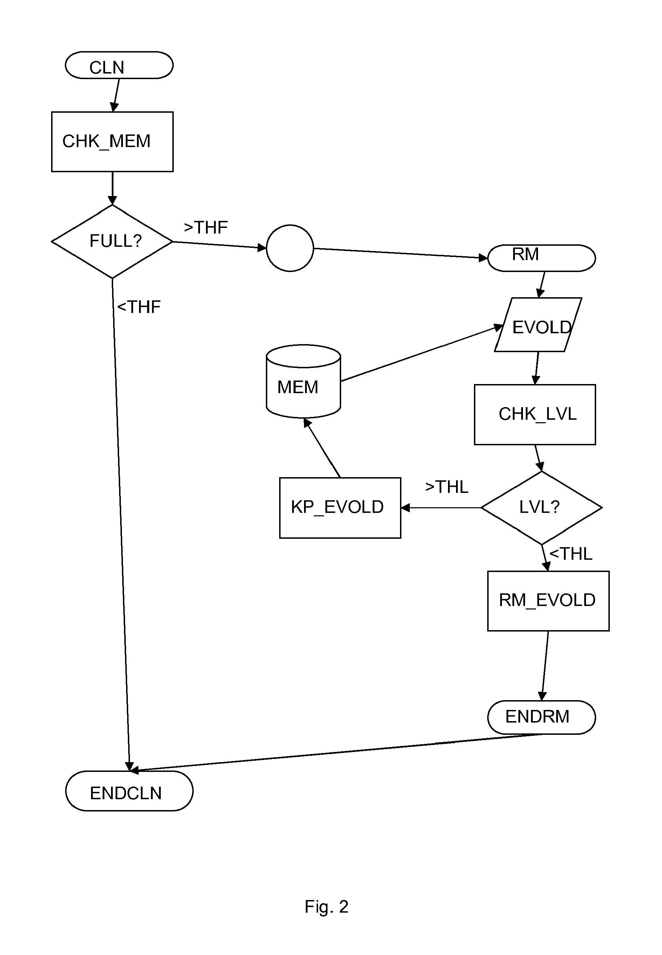

Fig. 2 shows a flowchart depicting another process according to an embodiment of the present invention.

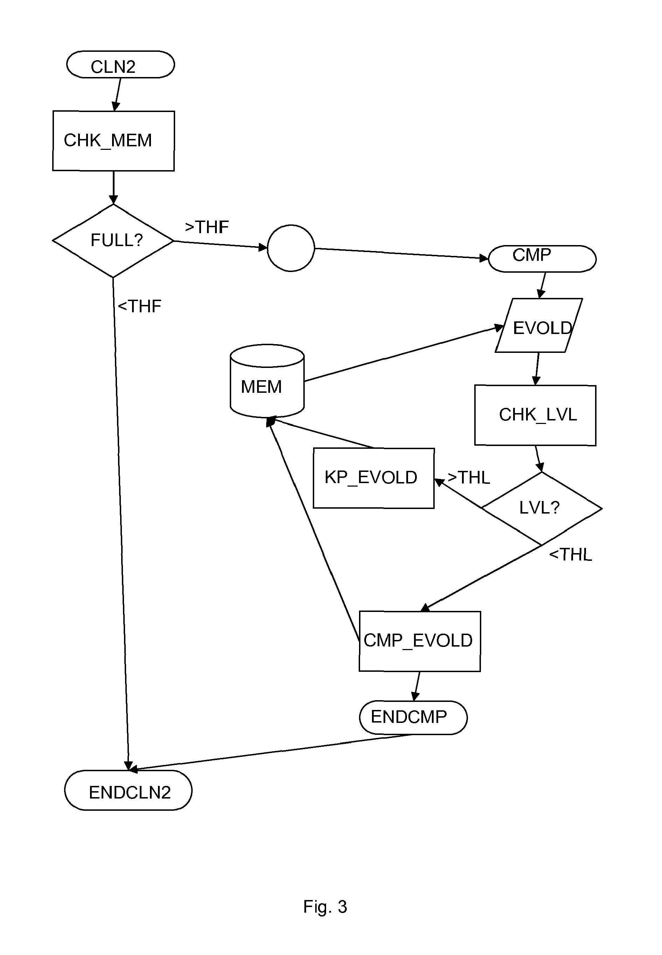

Fig. 3 sows a flowchart depicting yet another process according to an embodiment of the present invention
Fig. 4 shows a device within which an embodiment of the present invention may be deployed.

### DETAILED DESCRIPTION

Personal media recorders/players, by their very nature of being personal, are suited for configuration depending on each different user's requirements. Such devices include, among others, so-called MP3 players for recording and playing music and portable video players, whose common name, personal video recorders or PVR, even reflects the personal nature of their use.

The notion of personality associated with the use of such devices leads to the fact that each instance of such a device will be loaded with events depending on the particular requirements or desires of a particular user. A particular user may choose what he wants to store for later viewing or listening. At some point, due to the finite amount of storage area available in the device, it will no longer be possible to store further events without making space available by deleting events which have already been stored. This presents a problem in that the user has to decide what to delete.

Tools exist to address the problem. These are mentioned above in the state of the art section. However all of the tools which exist focus on automating the process of deciding what to delete to make space available for new events. The decision is usually based on statistical data related to the number of times a stored event has been accessed or how recently an event was accessed or how long an event has been stored without being accessed.

To further demonstrate the perceived need to automate the decision as to what events are stored on a portable media device, as well as tools to decide what events to delete, tools even exist to automatically populate an empty or partially-filled device based on predictions made by the tools. The tools can predict what the user might like to have stored, based on a profile set-up by the user or based on statistical analysis of what events the user has previously consumed.

It can be seen then that the existing tools are geared towards automating the process of populating the portable media player or removing stored items from the portable media player. In other words, a hands-off approach is taken to the management of stored events. This hands-off approach may not be desirable by certain users. Indeed, some users may feel the need to exert control over a decision as to the criteria for deleting an event, such criteria being difficult for an automated process to evaluate.

The present invention addresses the problems associated with the hands-off approach to the management of stored events in a media player such as a PVR for example. A user who wants to be sure that a certain stored event will not be erased simply because his media player decided that he had little or no interest in the stored event either because he had not accessed the stored event recently or had not accessed events deemed by the device to be similar in nature to the stored event, would benefit from having a media player in which an embodiment of the present invention is deployed. In such a media player, thanks to the hands-on nature of the decision-making process concerning the relevance of the stored events, the user can rest assured that he will not lose any important stored events.

According to an embodiment of the present invention, instead of going with the tendency of having systems to automate the decision process as to what is important, the user is given the opportunity to decide on the relevance of an event or a persistence level for the event. In this way, the user is asked to assign a persistence level to an event before that event is stored. The event is then stored, along with its attributed persistence level. The higher the persistence level, the more strongly the user feels that he would like to keep that event. In this manner, even if an event has never been accessed even once, the user can be comfortable in the knowledge that the event will remain stored whenever a clean-up has to be made. The automated clean-up aspect described above is retained. For example, when a predetermined percentage threshold of free storage space vs. total storage area is reached, a clean-up process is initiated whereby events deemed by the user to be of least importance or to have the lowest persistence level will be erased first to make space for new events. The clean-up process is continued until a desired level of free space, possibly dictated by a second predetermined occupancy level, is attained. At this second predetermined occupancy level, it is deemed that sufficient storage space is available.

The method of the invention can therefore be seen to incorporate two separate phases. A first phase or attribution phase where the user attributes a level of importance (relevance, pertinence or interest) to an event before storing it in the media player and a second phase or clean-up phase wherein an automated decision will be made, based on the attributed persistence level, as to whether a stored event can be removed or otherwise altered as part of a clean-up operation to make space, possibly for new events to be stored. Based on that decision, such alteration or removal of the relevant event(s) will be carried out.

Instead of having a storage space threshold trigger mechanism to start the clean-up phase (where a certain number of stored events are automatically erased to make space for new events), the erasing of events could simply be triggered by a comparison of free storage space versus size of a new event which is required to be stored. This amounts to a clean-up phase in which a partial clean-up is done just to make enough space for the new event. Again the choice of the order of events to be erased is based on the persistence level attributed to a particular event. In this way the two phases, storage and clean-up would be run back to back, with a partial clean-up being followed by the storage phase.

The choice of persistence level or interest level for an event is made at the time when the event is first stored. For example, whenever an event is to be stored, the operating system which manages the storage of events in the media player will request the user to indicate a level of importance or persistence level that he associates with that stored event. It follows then that all of the stored events in the media player will be associated with an attribute indicating the user's desire to keep that stored event. According to an embodiment of the invention, the user may edit the persistence attribute at a time of his choice, thereby modifying the attribute at any time depending on his changing taste or requirements in regard to that stored event.

According to another embodiment of the present invention, the user may choose to attach persistence level attributes to all events except events of a particular nature such as audio events for example, the user thus allowing the operating system to automatically determine the persistence level attribute for such events. In this way audio events would be managed automatically while other types of events would be managed according to attributes designated by the user.

Other methods for making space available for storage of new events are possible. According to an embodiment of the invention, instead of simply erasing events based on the events' persistence level attribute, space could be made by compressing or further compressing events with lower persistence levels. Such space-saving steps could be taken either at the time when the event is attributed its persistence level attribute or at some time afterwards, or triggered by the fact that space has to be made, i.e. when the free space level threshold is attained or when the system notices that not enough space is available to store an event which needs to be stored. Alternatively, events which have lower persistence levels may be converted from high definition to standard definition in order to save space.

By way of example, according to an embodiment of the invention, each event may be attributed a persistence level of between 1 and 5. The persistence level is attributed at the time when the user decides to store the event or it can be edited or modified at some time after the initial storage of the event. The system can be configured to begin making space (erasing events) whenever the available storage space for new events reaches 20% of the capacity of the total storage area for example, at which time events of level 1 are erased until a second predetermined storage capacity threshold is reached (e.g. 60%). If the second predetermined storage capacity is not achieved after all level 1 events have been erased, then the system would begin erasing level 2 events. The system could be configured to never erase events with a level 5 persistence attribute for example.

According to an embodiment of the present invention in which a mix of automatic level attribution and manual level attribution is featured, the system may be configured by having rules for the attribution of predetermined persistence levels for certain types of events. Media events such as video files may be tagged depending on their content, making it easy for the system to detect the nature of a particular event. For example, comedy films may receive a default persistence level of 1, while documentaries receive a default persistence level of 4. The default rules may be overridden at any time for any particular event by the user.

According to another embodiment of the present invention, the same principle may be applied to backing up of events stored on a personal media player. Since all of the events will have been attributed with a persistence level upon which the user is in full control, the same method may be used in a process for deciding which events need to be backed up first. In this case events having the highest persistence level are backed up first, while events with the lowest persistence level may not even be backed up at all for example.

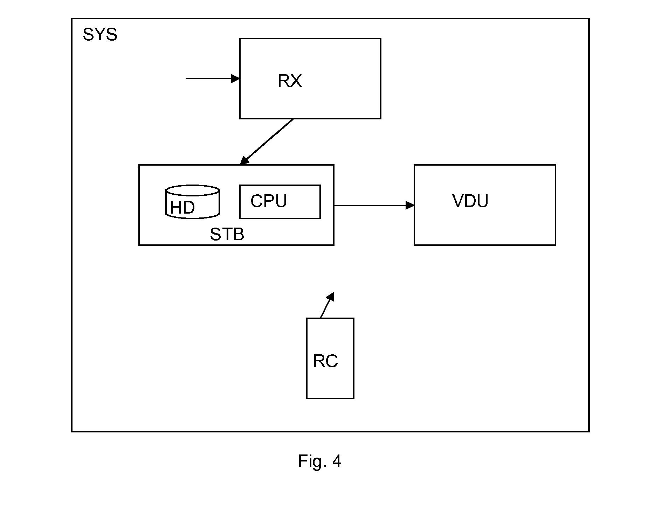

Any of the embodiments of the present invention may be deployed in a dedicated system comprising hardware devices such as that depicted in Fig. 4 or in a suitable general purpose apparatus or system such as an appropriately configured multimedia computing device and associated peripherals. As shown in Fig. 4, a suitable system comprises a receiver for receiving events in the form of digital media files, a set top box comprising a memory or hard disc to store the events received by the receiver, a processor to process the digital media files, a display unit to allow a user to view the events and a remote control device via which the user can communicate with the system.

## Claims

1. A method for managing storage space in a media device, said storage space being in a storage area (MEM) for events (EV), said events (EV) being digital media files, said storage area having a storage capacity, said management comprising storage of events (EV) in the storage space and/or removal of events (EV) stored in the storage area (MEM), said method **characterised in that** it allows for a user of said media device to have control over which events (EV) may be removed, said method comprising at least a storage phase (STO) and a clean-up phase (RM, CMP, CLN, CLN2), said storage phase (STO) comprising:
attributing a persistence level (LVL) to an event (EV), said attribution made by the user; and
storing the event (EV) and its attributed persistence level (LVL) in the storage area (MEM); and
said clean-up phase (RM, CMP, CLN, CLN2) comprising:
freeing up at least part of the storage area (MEM) in an automated manner based on a comparison of a stored event's (EVOLD) attributed persistence level (LVL) with a predetermined persistence level threshold (THL).

2. The method according to claim 1, wherein the clean-up phase (RM, CMP, CLN, CLN2) is initiated each time an event (EV) is to be stored.

3. The method according to claim 1, wherein the clean-up phase (CLN, CLN2) is initiated when a proportion of the storage space vs. the capacity of the storage area (MEM) reaches a predetermined capacity threshold (SPC?).

4. The method according to claim 1, wherein the freeing up comprises deleting (RM_EVOLD) of the stored event (EVOLD) or part of the stored event (EVOLD) according to the result of the comparison (LVL?).

5. The method according to claim 1, wherein the freeing up comprises compressing (CMP_EVOLD) the stored event (EVOLD) or part of the stored event (EVOLD) according to the result of the comparison (LVL?) and storing (MEM) the resulting compressed event.

6. The method according to claim 1, wherein the freeing up comprises backing up the stored event or part of the stored event (EVOLD) to a backup storage medium (MEM) according to the result of the comparison.

7. The method according to claim 1, wherein said method comprises a reattribution phase during which the user edits the attributed persistence level (LVL) of at least one event (EV, EVOLD).
